# EUROPÄISCHE PATENTSCHRIFT

(11) **EP 4 280 872 B1**
(45) Veröffentlichungstag und Bekanntmachung des Hinweises auf die Patenterteilung: **07.05.2025**
(21) Anmeldenummer: 22701228.3
(22) Anmeldetag: 20.01.2022
(51) Int. Cl.: A01M 7/00, B05B 1/08, B05B 12/08, B05B 1/30

(54) **VERFAHREN ZUM ANSTEUERN VON VENTILEN EINES SPRITZGESTÄNGES EINER LANDWIRTSCHAFTLICHEN AUSBRINGMASCHINE**
METHOD FOR CONTROLLING VALVES OF A SPRAYING BOOM OF AN AGRICULTURAL SPREADING MACHINE
PROCÉDÉ DE COMMANDE DE SOUPAPES D'UNE RAMPE DE PULVÉRISATION D'UNE MACHINE D'ÉPANDAGE AGRICOLE

(30) Priorität: 22.01.2021 DE 102021101299
(43) Veröffentlichungstag der Anmeldung: 29.11.2023
(73) Patentinhaber: Amazonen-Werke H. Dreyer SE & Co. KG, 49205 Hasbergen (DE)
(72) Erfinder: TRENTMANN, Markus, 49134 Wallenhorst (DE)
(86) Internationale Anmeldenummer: PCT/EP2022/051167
(87) Internationale Veröffentlichungsnummer: WO 2022/157214

(56) Entgegenhaltungen:
- CN-A- 109 479 862
- US-A- 5 296 702
- US-A1- 2020 101 480
- US-A1- 2020 221 682

## Beschreibung

Die Erfindung betrifft ein Verfahren zum Ansteuern von Ventilen eines Spritzgestänges einer landwirtschaftlichen Ausbringmaschine nach dem Oberbegriff des Patentanspruchs 1 und ein System zum Ansteuern von Ventilen eines Spritzgestänges einer landwirtschaftlichen Ausbringmaschine nach dem Oberbegriff des Patentanspruchs 11.

Im Leitungssystem eines Spritzgestänges einer landwirtschaftlichen Ausbringmaschine, beispielsweise einer Feldspritze, ist eine Mehrzahl von Ventilen angeordnet, über welche die Durchflussmenge an Spritzflüssigkeit zu den am Spritzgestänge angeordneten Spritzdüsen der landwirtschaftlichen Ausbringmaschine gesteuert werden kann. Entsprechende landwirtschaftliche Ausbringmaschinen können über eine Teilbreitenschaltung oder eine Einzeldüsenschaltung verfügen, sodass die zur Durchflussmengensteuerung eingesetzten Ventile unabhängig voneinander geschaltet werden können. Hierzu werden ventilspezifische Spannungssignale erzeugt und den an dem Spritzgestänge angeordneten Ventilen bereitgestellt.

US 2020/0101480 A1 offenbart Systeme und Verfahren zum Steuern des Betriebs eines Ventils. US 5 296 702 A offenbart eine Struktur und Verfahren, um ein Objekt von einem anderen Objekt zu unterscheiden. CN 109 479 862 A offenbart ein variables System zum Versprühen von Pestiziden und ein Steuerungsverfahren dafür. US 2020/221682 A1 offenbart Systeme und Verfahren zum Aufbringen von einem Fluid, einschließlich eines geteilten Spritzgestänges und Teilsteuerungsventilen für eine Teildrucksteuerung. In der Praxis hat sich gezeigt, dass die Position der jeweiligen Ventile am Spritzgestänge regelmäßig einen Einfluss auf die ventilspezifische Durchflussmenge an Spritzflüssigkeit hat. Im Spritzgestänge fällt beispielsweise der Fluiddruck von der Gestängemitte aus nach außen hin ab, sodass es bei identisch angesteuerten Ventilen aufgrund einer Druckdifferenz, welche auf die Position der jeweiligen Ventile am Spritzgestänge zurückgeht, zu voneinander abweichenden Durchflussmengen kommt. Die voneinander abweichenden Durchflussmengen ergeben sich auch aufgrund einer geänderten Anzugszeit der Ventile, welche abhängig ist von dem an dem jeweiligen Ventil anliegenden Fluidduck. Je größer der Fluiddruck vor dem Ventil, desto größer ist die Anzugszeit. Aufgrund voneinander abweichender Leitungslängen der mit den jeweiligen Ventilen verbundenen elektrischen Leitungen kommt es außerdem zu unterschiedlichen Spannungsabfällen bei der Signalbereitstellung, sodass unterschiedliche Spannungsniveaus an den Ventilen zu voneinander abweichenden Schaltverhalten führen. In diesem Zusammenhang kommt es mit abfallender Steuerspannung an den Ventilen beispielsweise zu einer Verlängerung der Anzugszeit der Ventile.

Darüber hinaus werden die Ventile an einem Spritzgestänge in Abhängigkeit ihrer Position an dem Spritzgestänge unterschiedlich stark von Druckwellen in den sich vor den Ventilen befindenden Leitungsabschnitten beeinflusst.

Die der Erfindung zugrundeliegende Aufgabe besteht somit darin, positionsbedingte Einflüsse auf die ventilspezifischen Durchflussmengen von Ventilen eines Spritzgestänges zu reduzieren.

Die Aufgabe wird gelöst durch den Gegenstand der unabhängigen Ansprüche, insbesondere durch ein Verfahren der eingangs genannten Art, wobei im Rahmen des erfindungsgemäßen Verfahrens die erzeugten ventilspezifischen Spannungssignale pulsweitenmoduliert sind und jeweils ein ventilspezifisches Tastverhältnis aufweisen, wobei die ventilspezifischen Tastverhältnisse die von der Position der jeweiligen Ventile am Spritzgestänge abhängigen Einflüsse auf die ventilspezifische Durchflussmenge an Spritzflüssigkeit kompensieren oder zumindest reduzieren.

Die Erfindung macht sich die Erkenntnis zunutze, dass die positionsbedingten Einflüsse auf die Durchflussmenge über eine ventilspezifische Anpassung der Pulsweitenmodulation kompensiert oder zumindest reduziert werden können. Die von der Position der jeweiligen Ventile am Spritzgestänge abhängigen Einflüsse können beispielsweise den von der Gestängemitte aus nach außen hin abfallenden Fluiddruck, den signalspezifischen Spannungsabfall beim Bereitstellen der ventilspezifischen Spannungssignale und/oder Druckwellen in den vor den Ventilen befindlichen Leitungsabschnitten betreffen. Somit können mehrere oder sämtliche Spannungssignale, welche verschiedenen Ventilen bereitgestellt werden, voneinander abweichende Tastverhältnisse aufweisen, obwohl über die Ventile eine identische Menge an Spritzflüssigkeit ausgebracht werden soll. Die Tastverhältnisse einzelner oder sämtlicher Spannungssignale unterscheiden sich also trotz identischer Soll-Durchflussmenge an Spritzflüssigkeit voneinander.

Die Ventile sind vorzugsweise Magnetventile und weisen eine Spule auf, über welche ein Magnetfeld zum Bewegen eines Ventilankers erzeugbar ist. Das Tastverhältnis entspricht dem Quotienten aus Impulsdauer und Periodendauer.

Das Erzeugen und/oder Bereitstellen der ventilspezifischen Spannungssignale erfolgt vorzugsweise durch ein Steuerungssystem der landwirtschaftlichen Ausbringmaschine. In dem Steuerungssystem kann eine Spannungsaufbereitung mittels eines Spannungswandlers durchgeführt werden. Über den Spannungswandler könnte dann eine ventilspezifische Spannungswerterhöhung erfolgen, um den Spannungsabfall in den elektrischen Leitungen zu den jeweiligen Ventilen auszugleichen.

In einer bevorzugten Ausführungsform des erfindungsgemäßen Verfahrens wird beim Erzeugen der ventilspezifischen Spannungssignale der an den jeweiligen Ventilen anliegende Fluiddruck zur Kompensation der druckabhängigen Einflüsse auf die ventilspezifische Durchflussmenge an Spritzflüssigkeit berücksichtigt. Die ventilspezifischen Tastverhältnisse sind also druckabhängig. Beim Erzeugen der ventilspezifischen Spannungssignale kann das Steuerungssystem beispielsweise eine Korrekturfunktion oder eine Korrekturtabelle verwenden, welche die Beziehung zwischen dem an den jeweiligen Ventilen anliegenden Fluiddruck und einer geeigneten Anpassung des Tastverhältnisses beschreibt. Die druckabhängigen Einflüsse auf die ventilspezifische Durchflussmenge an Spritzflüssigkeit können beispielsweise darauf zurückgeführt werden, dass der an den jeweiligen Ventilen anliegende Fluiddruck von der Gestängemitte aus nach außen hin abnimmt. Der Fluiddruck beeinflusst beispielsweise die Strömungsgeschwindigkeit der Spritzflüssigkeit durch die sich in einem geöffneten Zustand befindenden Ventile. Aufgrund der voneinander abweichenden Strömungsgeschwindigkeiten wird ein in der Gestängemitte angeordnetes Ventil von einer größeren Menge an Spritzflüssigkeit durchflossen als ein am Spritzgestänge außen angeordnetes Ventil, auch wenn beide Ventile eine identische Öffnungsdauer aufweisen. Dieser Einfluss kann durch Spannungssignale mit einem ventilspezifischen Tastverhältnis kompensiert oder zumindest reduziert werden. Der an den Ventilen anliegende Fluiddruck kann außerdem das Schaltverhalten der Ventile beeinflussen, sodass in der Gestängemitte angeordnete Ventile aufgrund des höheren Fluiddrucks langsamer öffnen als Ventile, welche im Außenbereich des Spritzgestänges angeordnet sind. Auch dieser Einfluss kann durch die Bereitstellung von Spannungssignalen mit ventilspezifischen Tastverhältnissen kompensiert oder reduziert werden. Der Abfall des Fluiddrucks an einem Ventil führt zu einem schnelleren Öffnungsverhalten, sodass das Ventil länger geöffnet ist. Ferner führt ein abfallender Fluiddruck vor der Düse auch zu einem sich verringernden Volumenstrom. Diese druckbedingten Einflüsse können mit ventilspezifischen Tastverhältnissen kompensiert werden.

In einer anderen Ausführungsform des erfindungsgemäßen Verfahrens werden die an den jeweiligen Ventilen anliegenden Fluiddrücke ermittelt. Das Steuerungssystem kann anhand der an den jeweiligen Ventilen anliegenden Fluiddrücke die druckabhängigen Einflüsse auf die ventilspezifische Durchflussmenge an Spritzflüssigkeit ermitteln, insbesondere berechnen. Hierzu kann das Steuerungssystem beispielsweise eine Korrekturfunktion oder eine Korrekturtabelle verwenden, welche die Beziehung zwischen Druck, Volumenstrom und Öffnungs- bzw. Schließzeit der Ventile beschreibt. Auf Grundlage dieser Ermittlungen können dann ventilspezifische Spannungssignale mit ventilspezifischen Tastverhältnissen erzeugt und bereitgestellt werden, durch welche die druckabhängigen Einflüsse auf die ventilspezifische Durchflussmenge an Spritzflüssigkeit kompensiert oder zumindest reduziert werden. Das Ermitteln der an den jeweiligen Ventilen anliegenden Fluiddrücke erfolgt vorzugsweise über eine oder mehrere Druckmessungen im Spritzgestänge. Am Spritzgestänge können folglich ein oder mehrere Druckmesseinrichtungen angeordnet sein. Alternativ oder zusätzlich können die an den jeweiligen Ventilen anliegenden Fluiddrücke von dem Steuerungssystem mittels Modellierung des Druckverhaltens im Spritzgestänge über den Volumenstrom ermittelt werden. Der Volumenstrom wird dabei entweder über eine oder mehrere Durchflussmesseinrichtungen gemessen oder auf Grundlage der vorliegenden Maschineneinstellungen berechnet. Die Druckverhältnisse im Spritzgestänge können ferner über die Leitungsgeometrie des Spritzgestänges modelliert werden.

In einer anderen bevorzugten Ausführungsform des erfindungsgemäßen Verfahrens erfolgt das Ermitteln der an den jeweiligen Ventilen anliegenden Fluiddrücke über zumindest eine Druckmessung und eine auf der Druckmessung basierende und die Druckveränderung im Spritzgestänge berücksichtigende Druckberechnung. Bei der Druckberechnung kann ein Druckabfallmodell verwendet werden. Das Druckabfallmodell kann beispielsweise auch die Leitungsgeometrie des Spritzgestänges berücksichtigen. Der Fluiddruck wird beispielsweise an einer zentralen Stelle im Spritzgestänge gemessen und der Druckabfall anhand des Leitungsquerschnitts und/oder des Flüssigkeitsausstoßes entlang des Gestänges berechnet. Auf diese Weise kann auf Grundlage einer Druckmessung ein ventilspezifischer Fluiddruck für mehrere Ventile des Spritzgestänges ermittelt werden. Die Einflüsse der Fluiddruckunterschiede an den Ventilen werden durch das ventilspezifische Tastverhältnis kompensiert oder zumindest verringert.

In einer anderen vorteilhaften Weiterbildung des erfindungsgemäßen Verfahrens wird beim Erzeugen der ventilspezifischen Spannungssignale der durch das Bereitstellen der ventilspezifischen Spannungssignale verursachte signalspezifische Spannungsabfall zur Kompensation der spannungsabhängigen Einflüsse auf die ventilspezifische Durchflussmenge an Spritzflüssigkeit berücksichtigt. Die ventilspezifischen Tastverhältnisse sind also spannungsabfallabhängig. Beim Erzeugen der ventilspezifischen Spannungssignale kann das Steuerungssystem beispielsweise eine Korrekturfunktion oder eine Korrekturtabelle verwenden, welche die Beziehung zwischen Spannungsabfall und einer geeigneten Anpassung des Tastverhältnisses beschreibt. Die bei aktiver Bestromung an den jeweiligen Ventilen anliegenden Spannungen nehmen von der Gestängemitte aus nach außen hin ab. Die von der Gestängemitte aus nach außen hin abnehmende Spannungen resultieren beispielsweise aus unterschiedlichen Leitungslängen der für die Signalbereitstellung verwendeten elektrischen Leitungen. Die voneinander abweichenden Leitungslängen der elektrischen Leitungen bringen unterschiedliche elektrische Widerstände mit sich. Üblicherweise erfolgt die Bereitstellung der Spannungssignale für Ventile, welche außen am Spritzgestänge angeordnet sind, über längere elektrische Leitungen als die Bereitstellung von Spannungssignalen für Ventile, welche mittig am Spritzgestänge angeordnet sind. Aufgrund der voneinander abweichenden elektrischen Widerstände der elektrischen Leitungen ergeben sich also unterschiedliche Spannungsniveaus an den Ventilen des Spritzgestänges. Der signalspezifische Spannungsabfall bzw. die unterschiedlichen Spannungsniveaus an den Ventilen können beispielsweise berechnet werden, beispielsweise auf Grundlage eines Spannungsabfallmodells. Alternativ oder zusätzlich können der signalspezifische Spannungsabfall bzw. die unterschiedlichen Spannungsniveaus an den Ventilen gemessen werden, beispielsweise über eine Spannungsabtastung. Die bei aktiver Bestromung an den jeweiligen Ventilen anliegenden Spannungen beeinflussen das Schaltverhalten der Ventile. Ventile, bei welchen die PWM-Impulse ein vergleichsweise hohes Spannungsniveau aufweisen, schalten schneller als Ventile, bei welchen die PWM-Impulse ein geringeres Spannungsniveau aufweisen, weil sich der Ventilanker schneller bewegt. Durch die kürzere Anzugszeit verlängert sich die Zeit, in der das Ventil geöffnet ist, sodass eine größere Menge an Flüssigkeit das Ventil durchfließt und ausgebracht wird. Bei einer langsamen Ankerbewegung aufgrund einer geringeren Spannung, ist die Anzugszeit länger und somit die Zeitspanne, in welcher das Ventil geöffnet ist, kürzer. Wegen des mit zunehmender Leitungslänge der elektrischen Leitungen abfallenden Spannungsniveaus der PWM-Impulse variieren also die Einschalt- und Ausschaltzeiten der Ventile voneinander. Dieser Effekt wird mit ventilspezifischen Tastverhältnissen kompensiert oder zumindest reduziert. Bei Spannungsvariation an den Ventilen sorgen die ventilspezifischen Tastverhältnisse dafür, dass die Ventile trotz der Spannungsvariation gleich schnell Ein- und Ausschalten. Hierzu kann beispielsweise eine mittlere Einschaltzeit aller Ventile verwendet berücksichtigt werden. Die mittlere Einschaltzeit kann zyklisch ermittelt werden.

In einer anderen bevorzugten Ausführungsform des erfindungsgemäßen Verfahrens werden die durch das Bereitstellen der ventilspezifischen Spannungssignale verursachten signalspezifischen Spannungsabfälle durch eine oder mehrere Spannungsmessungen ermittelt. Die bei aktiver Bestromung an den jeweiligen Ventilen anliegenden Spannungen können beispielsweise direkt an einem Steuergerät des Steuerungssystems gemessen werden. Das ventilspezifische Tastverhältnis wird in Abhängigkeit der bei aktiver Bestromung an den jeweiligen Ventilen anliegenden Spannung angepasst.

Es ist außerdem ein erfindungsgemäßes Verfahren bevorzugt, bei welchem die erzeugten ventilspezifischen Spannungssignale Einflüsse von Druckwellen in den mit den jeweiligen Ventilen verbundenen Leitungsabschnitten des Spritzgestänges auf die ventilspezifische Durchflussmenge an Spritzflüssigkeit kompensieren oder zumindest reduzieren. Die Druckwellen können Überdruckbereiche oder Unterdruckbereiche sein, welche sich mit einer Ausbreitungsgeschwindigkeit durch die Fluidleitung bewegen und somit verschiedene Leitungsabschnitte passieren. Die ventilspezifischen Spannungssignale sind also druckwellenabhängig. Durch die Pulsweitenmodulation entstehen Druckwellen in den Fluidleitungen des Spritzgestänges. Die Druckwellen in den Fluidleitungen des Spritzgestänges beeinflussen die ventilspezifische Durchflussmenge während der Öffnungsphase der jeweiligen Ventile. Dieser Effekt wird noch dadurch verstärkt, dass sich Druckwellen im Gestänge überlagern, sodass die Fehlapplikation noch gesteigert wird. Diese Druckwellen können mittels einer zeitlich aufeinander abgestimmten Ansteuerung der Ventile vermieden oder zumindest reduziert werden. Hierzu werden die Ventile so aufeinander abgestimmt oder versetzt zueinander angesteuert, dass sich die Druckwellen nicht überlagern und/oder vorhandene Druckwellen durch neu erzeugte Druckwellen eliminiert oder zumindest abgeschwächt werden.

Darüber hinaus ist ein erfindungsgemäßes Verfahren bevorzugt, bei welchem beim Erzeugen der ventilspezifischen Spannungssignale eine Druckwellenausbreitung, insbesondere die Ausbreitungsgeschwindigkeit von Druckwellen, im Spritzgestänge zur Vermeidung oder Reduzierung von Druckwellenüberlagerungen berücksichtigt wird. Über die Fließgeschwindigkeit und die Frequenz der Pulsweitenmodulation können Überlagerungen von Druckwellen in den Leitungen des Spritzgestänges auftreten. Druckwellen in den Fluidleitungen entstehen beispielsweise beim Öffnen und Schließen eines Ventils. Es kommt zu einer Druckwellenüberlagerung, wenn die Fließdauer der Spritzflüssigkeit zwischen in Reihe geschalteten, also hintereinander angeordneten, Ventilen der Zeitdauer entspricht, welche zwischen den Öffnungsvorgängen der in Reihe geschalteten Ventile liegt. Zur Vermeidung oder Reduzierung von Druckwellenüberlagerungen sind nebeneinander angeordnete und in Reihe geschaltete Ventile also derart aufeinander abgestimmt bzw. versetzt zueinander zu schalten, dass die Druckwellenausbreitung nicht zu einer Druckwellenüberlagerung führt. Auf diese Weise wird verhindert, dass Überdruckbereiche oder Unterdruckbereiche sich aufsummieren.

In einer alternativen Ausführungsform des erfindungsgemäßen Verfahrens wird beim Erzeugen der ventilspezifischen Spannungssignale zur Vermeidung oder Reduzierung von Druckwellenüberlagerungen die Fließgeschwindigkeit der Spritzflüssigkeit im Spritzgestänge und die Leitungslänge der Fluidleitung zwischen aufeinander folgenden in Reihe angeordneten Ventilen berücksichtigt. Die ventilspezifischen Spannungssignale sind also anhängig von der Fließgeschwindigkeit der Spritzflüssigkeit im Spritzgestänge. Somit können sich beispielsweise Einschaltzeitpunkte und Ausschaltzeitpunkte benachbarter Ventile überlagern. Vorzugsweise wird auch die Leitungslänge der Fluidleitung zwischen aufeinander folgenden und in Reihe angeordneten Ventilen bei der Signalerzeugung zur Druckwellenkompensation berücksichtigt. Beispielsweise kann ein sich in Richtung eines Ventils bewegendes Druckwellental dazu genutzt werden, eine von dem folgenden Ventil erzeugte Druckwelle teilweise oder vollständig zu kompensieren.

In einer Weiterbildung des erfindungsgemäßen Verfahrens werden unter Verwendung eines Druckspeichers Druckimpulse in die Leitungen des Spritzgestänges zum Ausgleichen oder Reduzieren von Druckwellen im Spritzgestänge eingebracht. Zum zielgerichteten Einbringen von Druckimpulsen müssen die Druckwellen und deren Ausbreitung in den Leitungen des Spritzgestänges bekannt sein. Wenn die durch die Ventilschaltungen in die Leitungen des Spritzgestänges eingebrachten Druckwellen bekannt sind, können geeignete Gegenimpulse über den Druckspeicher erzeugt werden, sodass es zu einem teilweisen oder vollständigen Impulsausgleich innerhalb der Leitungen des Spritzgestänges kommt.

Die der Erfindung zugrundeliegende Aufgabe wird ferner durch ein System der eingangs genannten Art gelöst, wobei das erfindungsgemäße System ein Steuerungssystem aufweist, welches dazu eingerichtet ist, pulsweitenmodulierte und jeweils ein ventilspezifisches Tastverhältnis aufweisende Spannungssignale zu erzeugen, sodass die von der Position der jeweiligen Ventile am Spritzgestänge abhängigen Einflüsse auf die ventilspezifische Durchflussmenge an Spritzflüssigkeit kompensiert oder zumindest reduziert werden. Das erfindungsgemäße System ist vorzugsweise dazu eingerichtet, Ventile eines Spritzgestänges einer landwirtschaftlichen Ausbringmaschine gemäß dem Verfahren nach einer der vorstehend beschriebenen Ausführungsformen anzusteuern. Hinsichtlich der Vorteile und Modifikationen des erfindungsgemäßen Systems wird somit zunächst auf die Vorteile und Modifikationen des erfindungsgemäßen Verfahrens verwiesen.

In einer bevorzugten Ausführungsform des erfindungsgemäßen Systems ist das Steuerungssystem dazu eingerichtet, beim Erzeugen der ventilspezifischen Spannungssignale die an den jeweiligen Ventilen anliegenden Fluiddrücke zur Kompensation der druckabhängigen Einflüsse auf die ventilspezifische Durchflussmenge an Spritzflüssigkeit zu berücksichtigen. Alternativ oder zusätzlich ist das Steuerungssystem dazu eingerichtet, beim Erzeugen der ventilspezifischen Spannungssignale den durch das Bereitstellen der ventilspezifischen Spannungssignale verursachten signalspezifischen Spannungsabfall zur Kompensation der spannungsabhängigen Einflüsse auf die ventilspezifische Durchflussmenge an Spritzflüssigkeit zu berücksichtigen.

Es ist außerdem ein erfindungsgemäßes System vorteilhaft, bei welchem das Steuerungssystem dazu eingerichtet ist, beim Erzeugen der ventilspezifischen Spannungssignale die in den mit den jeweiligen Ventilen verbundenen Leitungsabschnitten des Spritzgestänges auftretenden Druckwellen zur Kompensation der druckwellenabhängigen Einflüsse auf die ventilspezifische Durchflussmenge an Spritzflüssigkeit zu berücksichtigen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes System samt den an den Ventilen anliegenden Fluiddrücken und den daraus resultierenden ventilspezifischen Tastverhältnissen der erzeugten Spannungssignale;
- Fig. 2: ein erfindungsgemäßes System samt dem Niveau der an den Ventilen anliegenden Versorgungsspannungen und den daraus resultierenden ventilspezifischen Tastverhältnissen der erzeugten Spannungssignale;
- Fig. 3: die zeitlichen Entwicklungen der an einem Ventil anliegenden Spannung und des durch das Ventil fließenden Stroms sowie die Druckwellen aufweisenden zeitlichen Druckverläufe vor und hinter dem Ventil;
- Fig. 4: zeitliche Druckverläufe an drei verschiedenen Ventilen ohne Druckwellenkompensation; und
- Fig. 5: zeitliche Druckverläufe an den der Fig. 4 zugrundeliegenden Ventilen mit Druckwellenkompensation.

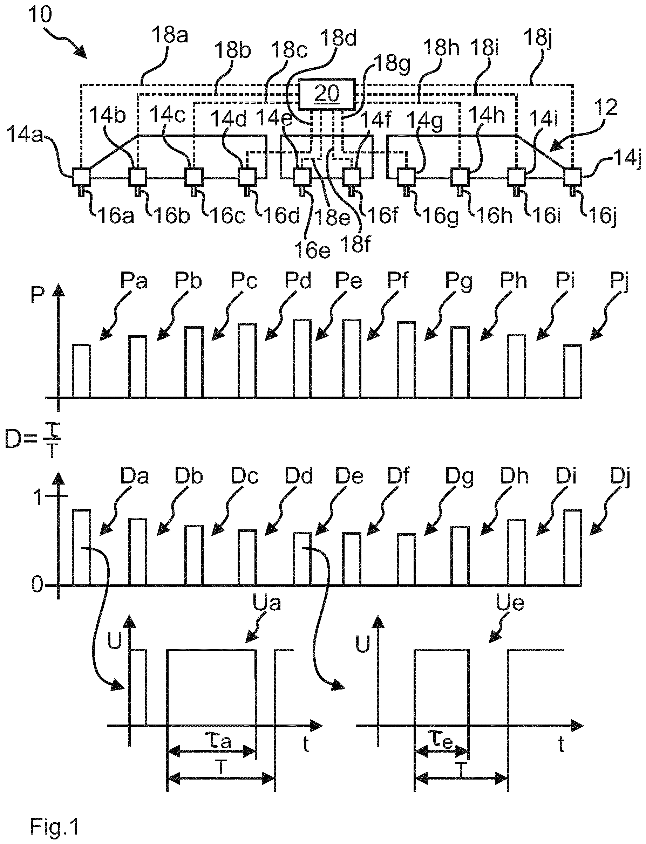

Die Fig. 1 zeigt ein System 10 zum Ansteuern von Ventilen 14a-14j eines Spritzgestänges 12 einer landwirtschaftlichen Ausbringmaschine. Die landwirtschaftliche Ausbringmaschine kann beispielsweise eine Feldspritze sein. An den Ventilen 14a-14j ist jeweils eine Ausbringdüse 16a-16j angeordnet, wobei die Ventile 14a-14j und die Ausbringdüsen 16a-16j jeweils eine Ventil-Düsen-Einheit bilden.

Das System 10 umfasst ferner ein Steuerungssystem 20, welches über die elektrischen Leitungen 18a-18j signalleitend mit den Ventilen 14a-14j verbunden ist. Das Steuerungssystem 20 erzeugt ventilspezifische Spannungssignale Uₐ, Uₑ zur Ansteuerung der Ventile 14a-14j, wobei die ventilspezifischen Spannungssignale Uₐ, Uₑ den Ventilen 14a-14j über die Leitungen 18a-18j bereitgestellt werden. Die dargestellten ventilspezifischen Spannungssignale Uₐ, Uₑ werden den Ventilen 14a, 14e bereitgestellt, wobei die den übrigen Ventilen 14b-14d, 14f-14j bereitgestellten ventilspezifischen Spannungssignale nicht dargestellt sind.

Die von dem Steuerungssystem 20 erzeugten ventilspezifischen Spannungssignale Uₐ, Uₑ sind pulsweitenmoduliert und weisen jeweils ein ventilspezifisches Tastverhältnis Dₐ-Dⱼ auf. Die ventilspezifischen Tastverhältnisse Dₐ-Dⱼ kompensieren oder reduzieren die von der Position der jeweiligen Ventile 14a-14j am Spritzgestänge 12 abhängigen Einflüsse auf die ventilspezifische Durchflussmenge an Spritzflüssigkeit.

Das unter dem Spritzgestänge 12 dargestellte Balkendiagramm zeigt den an den jeweiligen Ventilen 14a-14j anliegenden Fluiddruck Pₐ-Pⱼ. Aus dem Balkendiagramm ergibt sich, dass der an den jeweiligen Ventilen 14a-14j anliegende Fluiddruck Pₐ-Pⱼ von der Gestängemitte aus nach außen hin abnimmt. Da der Fluiddruck P die Strömungsgeschwindigkeit der Spritzflüssigkeit durch die Ventile 14a-14j beeinflusst, ist beim Ansteuern der Ventile 14a-14j der druckabhängige Einfluss auf die ventilspezifische Durchflussmenge an Spritzflüssigkeit zu berücksichtigen.

Der druckabhängige Einfluss auf die ventilspezifische Durchflussmenge an Spritzflüssigkeit wird dadurch kompensiert oder zumindest reduziert, dass die von dem Steuerungssystem 20 erzeugten ventilspezifischen Spannungssignale Uₐ, Uₑ ein ventilspezifisches Tastverhältnis Dₐ-Dⱼ aufweisen.

Das sich auf das Tastverhältnis D beziehende Balkendiagramm zeigt, dass das Tastverhältnis Dₐ des für das Ventil 14a erzeugten Spannungssignals Uₐ größer ist als das Tastverhältnis Dₑ des für das Ventil 14e erzeugten Spannungssignals Uₑ. Der von der Gestängemitte aus nach außen hin abfallende Fluiddruck P wird also dadurch ausgeglichen, dass die außenliegenden Ventile über ein ventilspezifisches Tastverhältnis länger geöffnet bleiben als die in der Gestängemitte angeordneten Ventile.

Das Tastverhältnis D entspricht dem Quotienten aus Impulsdauer τ und Periodendauer T. Die Periodendauer T stimmt bei sämtlichen von dem Steuerungssystem 20 erzeugten Spannungssignalen Uₐ, Uₑ überein. Die sich voneinander unterscheidenden Tastverhältnisse Dₐ, Dₑ ergeben sich aufgrund unterschiedlicher Impulsdauern τₐ, τₑ.

Zur Umsetzung der Ventilsteuerung ist es erforderlich, dass das Steuerungssystem 20 die an dem jeweiligen Ventilen 14a-14j anliegenden Fluiddrücke Pₐ-Pⱼ kennt. Im Rahmen des Ansteuerungsverfahrens werden die an den jeweiligen Ventilen 14a-14j anliegenden Fluiddrücke Pₐ-Pⱼ beispielsweise über eine Druckmessung und eine auf der Druckmessung basierende und die Druckveränderung im Spritzgestänge 12 berücksichtigende Druckberechnung ermittelt. Bei der Berechnung kann das Steuerungssystem 20 beispielsweise ein Druckabfallmodell verwenden, sodass der tatsächliche Fluiddruck P lediglich an einer zentralen Stelle im Spritzgestänge 12 gemessen werden muss und der Druckabfall dann anhand des Leitungsquerschnitts und/oder des Flüssigkeitsausstoßes entlang des Spritzgestänges 12 berechnet wird. Auf diese Weise ist es möglich, die Einflüsse der Fluiddruckunterschiede an den Ventilen 14a-14j durch ventilspezifische Tastverhältnisse Dₐ-Dⱼ zu kompensieren oder zumindest zu verringern.

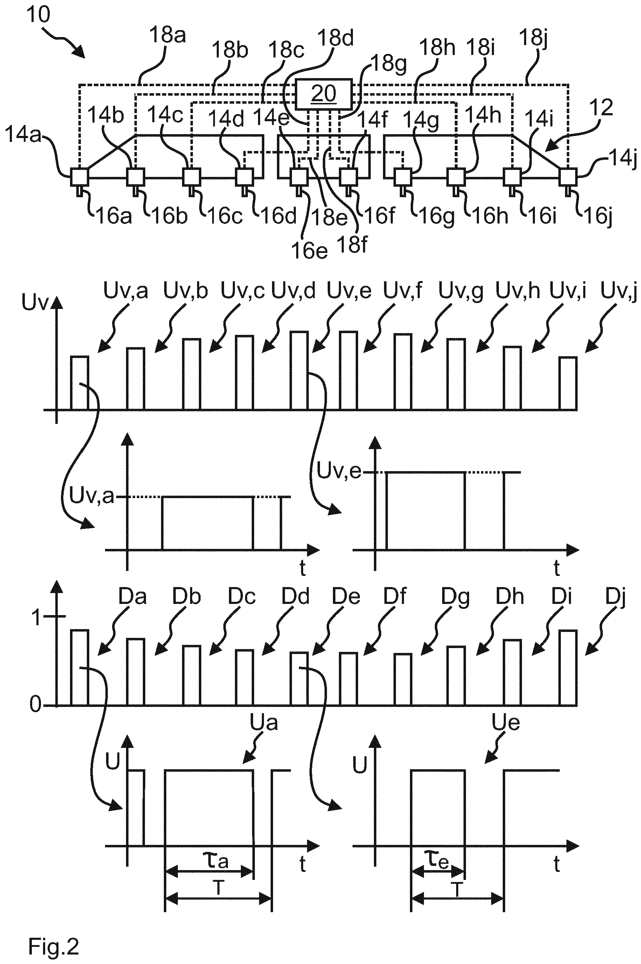

Die Fig. 2 zeigt ebenfalls ein System 10 zum Ansteuern von Ventilen 14a-14j eines Spritzgestänges 12. Das Steuerungssystem 20 erzeugt ventilspezifische Spannungssignale Uₐ, Uₑ zur Ansteuerung der Ventile 14a-14j. Die elektrischen Leitungen 18a-18j, über welche das Steuerungssystem 20 mit den Ventilen 14a-14j verbunden ist, weisen voneinander abweichende Leitungslängen auf, sodass sich aufgrund voneinander abweichender elektrischer Widerstände unterschiedliche signalspezifische Spannungsabfälle beim Bereitstellen der Spannungssignale Uₐ, Uₑ ergeben.

Das unter dem System 10 dargestellte Balkendiagramm zeigt, dass das Versorgungsspannungsniveau U_{V}, also das Spannungsniveau der an den Ventilen 14a-14j ankommenden PWM-Impulse, aufgrund der unterschiedlichen Längen der elektrischen Leitungen 18a-18j von der Gestängemitte aus nach außen hin abnimmt. Die bei aktiver Bestromung an den jeweiligen Ventilen 14a-14j anliegenden Spannungen U_{V,a}-U_{V,j} nehmen von der Gestängemitte aus nach außen hin ab. Die bei aktiver Bestromung an den jeweiligen Ventilen 14a-14j anliegenden Spannungen U_{V,a}-U_{V,j} beeinflussen das Schaltverhalten der Ventile 14a-14j. Wegen der abfallenden Spannungen U_{v,a}-U_{v,j} variieren die Einschalt- und Ausschaltzeiten der Ventile 14a-14j voneinander, sodass dies mit ventilspezifischen Tastverhältnissen Dₐ-Dⱼ kompensiert werden muss. Das Steuerungssystem 20 erzeugt zum Kompensieren oder zumindest zum Reduzieren der spannungsabhängigen Einflüsse auf die ventilspezifische Durchflussmenge an Spritzflüssigkeit ventilspezifische Spannungssignale Uₐ, Uₑ, welche den signalspezifischen Spannungsabfall bei der Signalbereitstellung berücksichtigen. Das Spannungssignal Uₐ, welches dem außenliegenden Ventil 14a bereitgestellt wird, weist somit ein größeres Tastverhältnis Dₐ als das Spannungssignal Uₑ auf, welches dem Ventil 14e bereitgestellt wird.

Damit das Steuerungssystem 20 den signalspezifischen Spannungsabfall zur Kompensation der spannungsabhängigen Einflüsse auf die ventilspezifische Durchflussmenge an Spritzflüssigkeit berücksichtigen kann, muss dem Steuerungssystem 20 der signalspezifische Spannungsabfall bekannt sein. Im Rahmen des Ansteuerungsverfahrens erfolgt also ein Ermitteln der durch das Bereitstellen der ventilspezifischen Spannungssignale Uₐ, Uₑ verursachten signalspezifischen Spannungsabfälle durch eine oder mehrere Spannungsmessungen. Das ventilspezifische Tastverhältnis Dₐ-Dⱼ wird in Abhängigkeit der bei aktiver Bestromung an den jeweiligen Ventilen 14a-14j anliegenden Spannungen U_{v,a}-U_{v,j} angepasst.

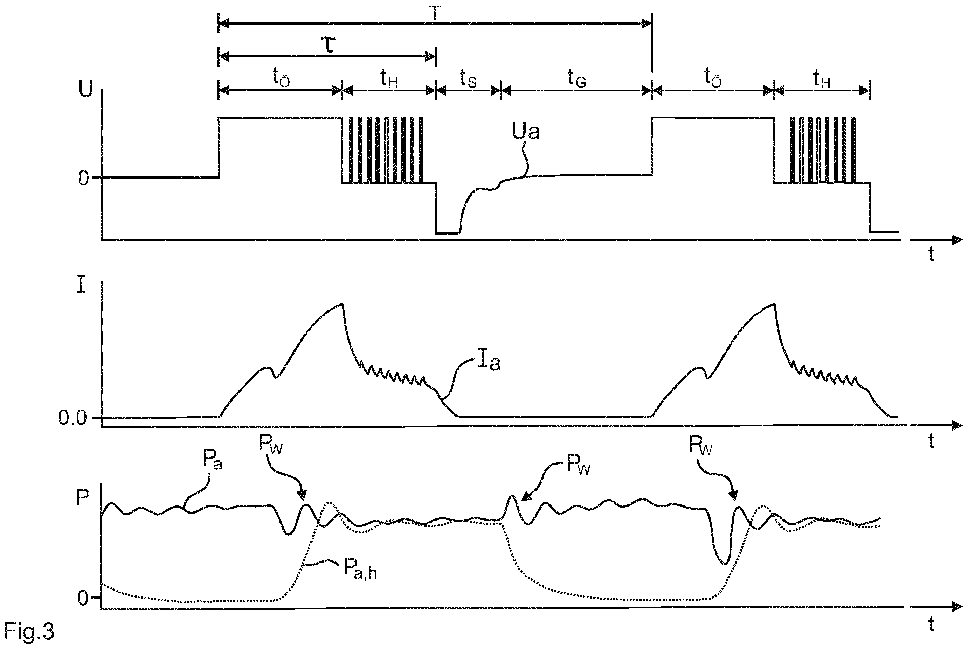

Die Fig. 3 zeigt den zeitlichen Verlauf einer an einem als Ventil 14a anliegenden Spannung Uₐ, den zeitlichen Verlauf eines durch ein Ventil 14a fließenden Stroms Iₐ und zeitliche Druckverläufe Pₐ, P_{a,h} vor und hinter dem Ventil 14a. In den Diagrammen sind die Spannung U, die Stromstärke I und der Druck P über die Zeit t aufgetragen. Bei dem nicht dargestellten Ventil 14a handelt es sich um ein Magnetventil.

Aus dem zeitlichen Spannungsverlauf Uₐ ergibt sich, dass das Spannungssignal pulsweitenmoduliert ist. Während einer Öffnungsphase t_{Ö} bewirkt ein Spannungsimpuls die Einprägung eines Stroms in das Ventil 14a, wobei ein Ventilanker durch die Stromeinprägung während der Öffnungsphase t_{Ö} von einer geschlossenen Stellung in eine geöffnete Stellung bewegt wird. Nachdem der Ventilanker die geöffnete Stellung erreicht hat, erfolgt während einer Haltephase t_{H} eine Stromeinprägung, welche ausreichend ist, um den Ventilanker in der geöffneten Position zu halten. Zum Schließen des Ventils 14a erfolgt zunächst eine kurzzeitige Spannungsinvertierung und anschließend eine Unterbrechung der Spannungsversorgung während einer Schließphase t_{S}. Während der Geschlossenphase t_{G} liegt das Spannungssignal auf Nullniveau, sodass kein Strom in das Ventil 14a eingeprägt wird. Zum erneuten Öffnen des Ventils 14a folgt auf die Geschlossenphase t_{G} erneut die Öffnungsphase t_{Ö} und die Haltephase t_{H}.

Das Druckverlaufsdiagramm zeigt, dass der an dem Ventil 14a anliegende Fluiddruck Pₐ sich konstant auf einem hohen Niveau befindet und eine Mehrzahl von Druckwellen P_{W} aufweist. Der Fluiddruck P_{a,h} hinter dem Ventil 14a erhöht sich während der Öffnungsphase t_{Ö} und fällt in der Schließphase t_{S} wieder ab.

Durch die Pulsweitenmodulation entstehen also Druckwellen P_{W} in den Leitungen des Spritzgestänges 12. Die Druckwellen P_{W} beeinflussen die ventilspezifische Durchflussmenge während der Öffnungsphase t_{Ö} und der Haltephase t_{H}. Dieser Effekt wird dadurch verstärkt, dass die Druckwellen P_{W} sich im Spritzgestänge 12 überlagern können, sodass die Fehlapplikation noch gesteigert wird.

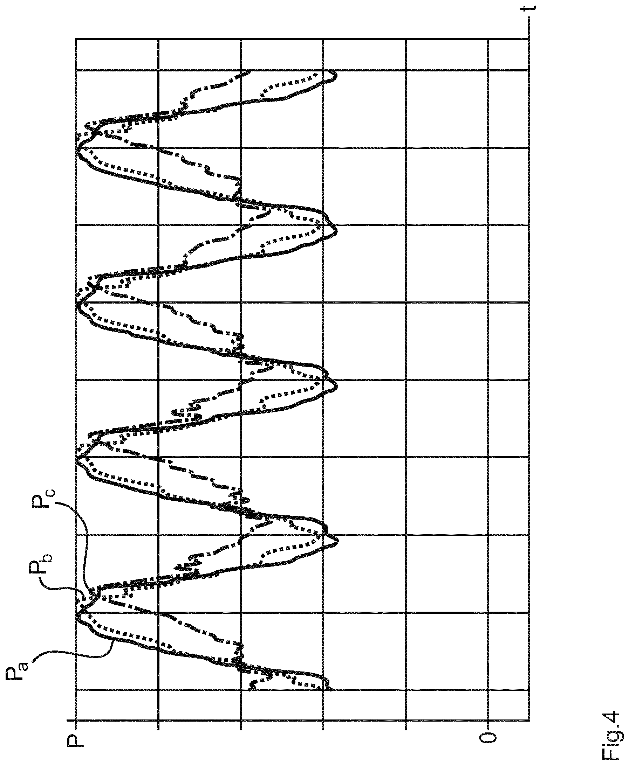

Die Fig. 4 zeigt drei wellenartige Druckverläufe Pₐ-P_{c} an drei Ventilen 14a-14c über die Zeit t, wenn keine Druckwellenkompensation erfolgt.

Im Rahmen des Verfahrens werden die erzeugten ventilspezifischen Spannungssignale unter Berücksichtigung der Einflüsse von Druckwellen P_{W} in den mit den jeweiligen Ventilen 14a-14j verbundenen Leitungsabschnitten des Spritzgestänges 12 auf die ventilspezifische Durchflussmenge von dem Steuerungssystem 20 erzeugt, sodass es zu einer aufeinander abgestimmten bzw. versetzt zueinander erfolgenden Ansteuerung der Ventile 14a-14j kommt, wodurch sich die Druckwellen P_{W} nicht überlagern und vorhandene Druckwellen P_{W} durch neu erzeugte Druckwellen P_{W} eliminiert oder zumindest abgeschwächt werden.

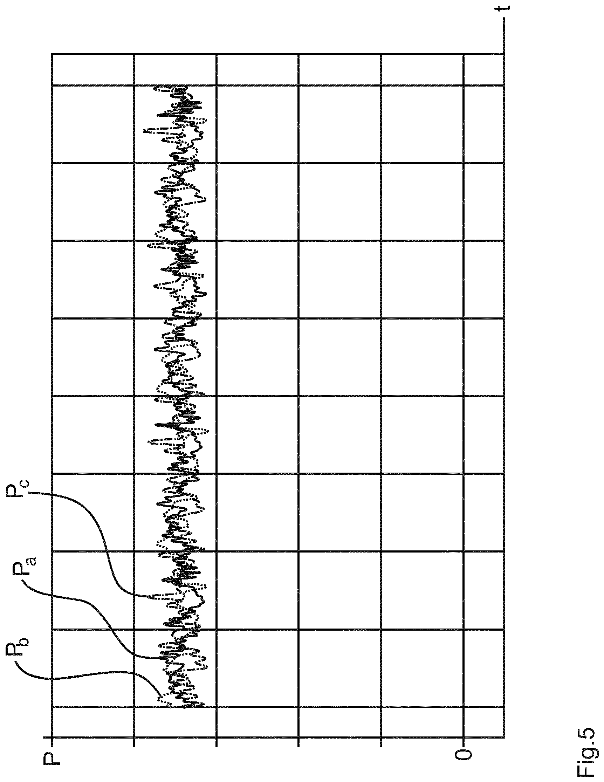

Der Effekt dieser Druckwellenkompensation ist in der Fig. 5 dargestellt. Der Ausschlag bzw. die Amplitude der Druckwellen innerhalb des Spritzgestänges wird durch die Druckwellenkompensation erheblich reduziert. Beim Erzeugen der ventilspezifischen Spannungssignale Uₐ, Uₑ wird die Druckwellenausbreitung, nämlich die Ausbreitungsgeschwindigkeit der Druckwellen P_{W} im Spritzgestänge 12 zur Vermeidung oder Reduzierung von Druckwellenüberlagerungen berücksichtigt. Über die Fließgeschwindigkeit der Spritzflüssigkeit im Spritzgestänge 12 und die PWM-Frequenz können Überlagerungen von Druckwellen P_{W} durch eine geeignete Ansteuerung der Ventile 14a-14j vermieden oder zumindest reduziert werden. Beim Erzeugen der ventilspezifischen Spannungssignale Uₐ, Uₑ zur Vermeidung oder Reduzierung von Druckwellenüberlagerungen berücksichtigt das Steuerungssystem beim Erzeugen der ventilspezifischen Spannungssignale Uₐ, Uₑ die Fließgeschwindigkeit der Spritzflüssigkeit im Spritzgestänge 12 und die Leitungslänge der Fluidleitung zwischen aufeinander folgenden und in Reihe angeordneten Ventilen 14a-14j.

### Bezugszeichenliste

- 10: System
- 12: Spritzgestänge
- 14a-14j: Ventile
- 16a-16j: Ausbringdüsen
- 18a-18j: Leitungen
- 20: Steuerungssystem
- D, Dₐ-Dⱼ: Tastverhältnisse
- I: Stromstärke
- Iₐ: Stromstärke
- P_{W}: Druckwellen
- P: Fluiddruck
- Pₐ-Pⱼ: Fluiddrücke
- P_{a,h}: Fluiddruck
- t: Zeit
- t_{Ö}: Öffnungsphase
- t_{H}: Haltephase
- t_{S}: Schließphase
- t_{G}: Geschlossenphase
- τ, τₐ, τₑ: Impulsdauern
- T: Periodendauer
- U: Spannung
- Uₐ, Uₑ: Spannungssignale
- U_{V}: Versorgungsspannungsniveau
- U_{V,a}-U_{V,j}: Versorgungsspannungsniveaus

## Patentansprüche

1. Verfahren zum Ansteuern von Ventilen (14a-14j) eines Spritzgestänges (12) einer landwirtschaftlichen Ausbringmaschine, mit den Schritten:
- Erzeugen von ventilspezifischen Spannungssignalen (Uₐ, Uₑ) zur Ansteuerung von mehreren an dem Spritzgestänge (12) angeordneten Ventilen (14a-14j); und
- Bereitstellen der ventilspezifischen Spannungssignale (Uₐ, Uₑ) an den jeweiligen Ventilen (14a-14j),
**dadurch gekennzeichnet, dass** die erzeugten ventilspezifischen Spannungssignale (Uₐ, Uₑ) pulsweitenmoduliert sind und jeweils ein ventilspezifisches Tastverhältnis (Dₐ-Dⱼ) aufweisen, wobei das Tastverhältnis dem Quotienten aus Impulsdauer und Periodendauer entspricht,
wobei die ventilspezifischen Tastverhältnisse (Dₐ-Dⱼ) die von der Position der jeweiligen Ventile (14a-14j) am Spritzgestänge (12) abhängigen Einflüsse auf die ventilspezifische Durchflussmenge an Spritzflüssigkeit kompensieren oder zumindest reduzieren, wobei sich die Tastverhältnisse einzelner oder sämtlicher Spannungssignale trotz identischer Soll-Durchflussmenge an Spritzflüssigkeit voneinander unterscheiden.

2. Verfahren nach Anspruch 1,
**dadurch gekennzeichnet, dass** beim Erzeugen der ventilspezifischen Spannungssignale (Uₐ, Uₑ) der an den jeweiligen Ventilen (14a-14j) anliegende Fluiddruck (Pₐ-Pⱼ) zur Kompensation der druckabhängigen Einflüsse auf die ventilspezifische Durchflussmenge an Spritzflüssigkeit berücksichtigt wird.

3. Verfahren nach Anspruch 2,
**gekennzeichnet durch** den Schritt:
- Ermitteln der an den jeweiligen Ventilen (14a-14j) anliegenden Fluiddrücke (Pₐ-Pⱼ), vorzugsweise über eine oder mehrere Druckmessungen im Spritzgestänge (12).

4. Verfahren nach Anspruch 3,
**dadurch gekennzeichnet, dass** das Ermitteln der an den jeweiligen Ventilen (14a-14j) anliegenden Fluiddrücke (Pₐ-Pⱼ) über zumindest eine Druckmessung und eine auf der Druckmessung basierende und die Druckveränderung im Spritzgestänge (12) berücksichtigende Druckberechnung erfolgt.

5. Verfahren nach einem der vorstehenden Ansprüche,
**dadurch gekennzeichnet, dass** beim Erzeugen der ventilspezifischen Spannungssignale (Uₐ, Uₑ) der durch das Bereitstellen der ventilspezifischen Spannungssignale (Uₐ, Uₑ) verursachte signalspezifische Spannungsabfall zur Kompensation der spannungsabhängigen Einflüsse auf die ventilspezifische Durchflussmenge an Spritzflüssigkeit berücksichtigt wird.

6. Verfahren nach Anspruch 5,
**gekennzeichnet durch** den Schritt:
- Ermitteln der durch das Bereitstellen der ventilspezifischen Spannungssignale (Uₐ, Uₑ) verursachten signalspezifischen Spannungsabfälle durch eine oder mehrere Spannungsmessungen.

7. Verfahren nach einem der vorstehenden Ansprüche,
**dadurch gekennzeichnet, dass** die erzeugten ventilspezifischen Spannungssignale (Uₐ, Uₑ) Einflüsse von Druckwellen (P_{W}) in den mit den jeweiligen Ventilen (14a-14j) verbundenen Leitungsabschnitten des Spritzgestänges (12) auf die ventilspezifische Durchflussmenge an Spritzflüssigkeit kompensieren oder zumindest reduzieren.

8. Verfahren nach Anspruch 7,
**dadurch gekennzeichnet, dass** beim Erzeugen der ventilspezifischen Spannungssignale (Uₐ, Uₑ) eine Druckwellenausbreitung, insbesondere die Ausbreitungsgeschwindigkeit von Druckwellen (P_{W}), im Spritzgestänge (12) zur Vermeidung oder Reduzierung von Druckwellenüberlagerungen berücksichtigt wird.

9. Verfahren nach Anspruch 8,
**dadurch gekennzeichnet, dass** beim Erzeugen der ventilspezifischen Spannungssignale (Uₐ, Uₑ) zur Vermeidung oder Reduzierung von Druckwellenüberlagerungen die Fließgeschwindigkeit der Spritzflüssigkeit im Spritzgestänge (12) und die Leitungslänge der Fluidleitung zwischen aufeinanderfolgenden in Reihe angeordneten Ventilen (14a-14j) berücksichtigt wird.

10. Verfahren nach einem der Ansprüche 7 bis 9,
**gekennzeichnet durch** den Schritt:
- Einbringen von Druckimpulsen in die Leitungen des Spritzgestänges (12) unter Verwendung eines Druckspeichers zum Ausgleichen oder Reduzieren von Druckwellen (P_{W}) im Spritzgestänge (12).

11. System (10) zum Ansteuern von Ventilen (14a-14j) eines Spritzgestänges (12) einer landwirtschaftlichen Ausbringmaschine, insbesondere mittels eines Verfahrens nach einem der vorstehenden Ansprüche, mit
- mehreren an einem Spritzgestänge (12) angeordnete Ventilen (14a-14j); und
- einem Steuerungssystem (20), welches dazu eingerichtet ist, ventilspezifische Spannungssignale (Uₐ, Uₑ) zur Ansteuerung der Ventile (14a-14j) zu erzeugen und den Ventilen (14a-14j) die ventilspezifischen Spannungssignale (Uₐ, Uₑ) bereitzustellen;
**dadurch gekennzeichnet, dass** das Steuerungssystem (20) dazu eingerichtet ist, pulsweitenmodulierte und jeweils ein ventilspezifisches Tastverhältnis (Dₐ-Dⱼ) aufweisende Spannungssignale (Uₐ, Uₑ) zu erzeugen, sodass die von der Position der jeweiligen Ventile (14a-14j) am Spritzgestänge (12) abhängigen Einflüsse auf die ventilspezifische Durchflussmenge an Spritzflüssigkeit kompensiert oder zumindest reduziert werden, wobei das Tastverhältnis dem Quotienten aus Impulsdauer und Periodendauer entspricht und wobei sich die Tastverhältnisse einzelner oder sämtlicher Spannungssignale trotz identischer Soll-Durchflussmenge an Spritzflüssigkeit voneinander unterscheiden.

12. System (10) nach Anspruch 11,
**dadurch gekennzeichnet, dass** das Steuerungssystem (20) dazu eingerichtet ist, beim Erzeugen der ventilspezifischen Spannungssignale (Uₐ, Uₑ)
- die an den jeweiligen Ventilen (14a-14j) anliegenden Fluiddrücke (Pₐ-Pⱼ) zur Kompensation der druckabhängigen Einflüsse auf die ventilspezifische Durchflussmenge an Spritzflüssigkeit, und/oder
- den durch das Bereitstellen der ventilspezifischen Spannungssignale (Uₐ, Uₑ) verursachten signalspezifischen Spannungsabfall zur Kompensation der spannungsabhängigen Einflüsse auf die ventilspezifische Durchflussmenge an Spritzflüssigkeit zu berücksichtigen.

13. System (10) nach Anspruch 11 oder 12,
**dadurch gekennzeichnet, dass** das Steuerungssystem (20) dazu eingerichtet ist, beim Erzeugen der ventilspezifischen Spannungssignale (Uₐ, Uₑ) die in den mit den jeweiligen Ventilen (14a-14j) verbundenen Leitungsabschnitten des Spritzgestänges (12) auftretenden Druckwellen (P_{W}) zur Kompensation der druckwellenabhängigen Einflüsse auf die ventilspezifische Durchflussmenge an Spritzflüssigkeit zu berücksichtigen.

## Claims

1. Method for controlling valves (14a-14j) of a spray boom (12) of an agricultural spreading machine, comprising the steps of:
- generating valve-specific voltage signals (Uₐ, Uₑ) for controlling a plurality of valves (14a-14j) arranged on the spray boom (12); and
- providing the valve-specific voltage signals (Uₐ, Uₑ) to the respective valves (14a-14j),
**characterized in that** the generated valve-specific voltage signals (Uₐ, Uₑ) are pulse width modulated and each has a valve-specific duty cycle (Dₐ-Dⱼ), wherein the duty cycle corresponds to the quotient of pulse duration and period duration,
wherein the valve-specific duty cycles (Dₐ-Dⱼ) compensate for, or at least reduce, the influences on the valve-specific flow rate of spray liquid which depend on the position of the respective valves (14a-14j) on the spray boom (12), wherein the duty cycles of each individual or all voltage signals differ from one another, despite identical target flow rates of spray liquid.

2. Method according to claim 1,
**characterized in that** when generating the valve-specific voltage signals (Uₐ, Uₑ), the fluid pressure (Pₐ-Pⱼ) applied to the respective valves (14a-14j) is taken into account in order to compensate for the pressure-dependent influences on the valve-specific flow rate of spray liquid.

3. Method according to claim 2,
**characterized by** the step of:
- determining the fluid pressures (Pₐ-Pⱼ) applied to the respective valves (14a-14j), preferably via one or more pressure measurements in the spray boom (12).

4. Method according to claim 3,
**characterized in that** the fluid pressures (Pₐ-Pⱼ) applied to the respective valves (14a-14j) are determined via at least one pressure measurement and a pressure calculation which is based on the pressure measurement and takes into account the pressure change in the spray boom (12).

5. Method according to any of the preceding claims,
**characterized in that,** when generating the valve-specific voltage signals (Uₐ, Uₑ), the signal-specific voltage drop, which is caused by providing the valve-specific voltage signals (Uₐ, Uₑ), is taken into account in order to compensate for the voltage-dependent influences on the valve-specific flow rate of spray liquid.

6. Method according to claim 5,
**characterized by** the step of:
- determining, via one or more voltage measurements, the signal-specific voltage drops caused by the valve-specific voltage signals (Uₐ, Uₑ).

7. Method according to any of the preceding claims,
**characterized in that** the generated valve-specific voltage signals (Uₐ, Uₑ) compensate for, or at least reduce, influences of pressure waves (P_{W}) on the valve-specific flow rate of spray liquid in the line sections of the spray boom (12) connected to the respective valves (14a-14j).

8. Method according to claim 7,
**characterized in that,** when generating the valve-specific voltage signals (Uₐ, Uₑ), a pressure wave propagation, in particular the propagation velocity of pressure waves (P_{W}), is taken into account in order to avoid or reduce pressure wave superposition in the spray boom (12).

9. Method according to claim 8,
**characterized in that** when generating the valve-specific voltage signals (Uₐ, Uₑ), the flow velocity of the spray liquid in the spray boom (12) and the length of the fluid line between successive valves (14a-14j) arranged in series are taken into account in order to avoid or reduce pressure wave superpositions.

10. Method according to any of claims 7 to 9,
**characterized by** the step of:
- introducing pressure pulses into the lines of the spray boom (12) using a pressure accumulator in order to compensate for or reduce pressure waves (P_{W}) in the spray boom (12).

11. System (10) for controlling valves (14a-14j) of a spray boom (12) of an agricultural spreading machine, in particular by means of a method according to any of the preceding claims, comprising
- a plurality of valves (14a-14j) arranged on a spray boom (12); and
- a control system (20) which is designed to generate valve-specific voltage signals (Uₐ, Uₑ) for controlling the valves (14a-14j) and to provide the valves (14a-14j) with the valve-specific voltage signals (Uₐ, Uₑ);
**characterized in that** the control system (20) is designed to generate voltage signals (Uₐ, Uₑ) which are both pulse-width modulated and have a valve-specific duty cycle (Dₐ-Dⱼ), so that the influences on the valve-specific flow rate of spray liquid, which are dependent on the position of the respective valves (14a-14j) on the spray boom (12), are compensated for, or at least reduced, wherein the duty cycle corresponds to the quotient of pulse duration and period duration and wherein the duty cycles of individual or all voltage signals differ from one another, despite the identical target flow rate of spray liquid.

12. System (10) according to claim 11,
**characterized in that** the control system (20) is designed, when generating the valve-specific voltage signals (Uₐ, Uₑ)
- to take into account the fluid pressures (Pₐ-Pⱼ) applied to the respective valves (14a-14j) in order to compensate for the pressure-dependent influences on the valve-specific flow rate of spray liquid, and/or
- to take into account the signal-specific voltage drop caused by providing the valve-specific voltage signals (Uₐ, Uₑ) in order to compensate for the voltage-dependent influences on the valve-specific flow rate of spray liquid.

13. System (10) according to either claim 11 or claim 12,
**characterized in that** the control system (20) is designed, when generating the valve-specific voltage signals (Uₐ, Uₑ), to take into account the pressure waves (P_{W}) occurring in the line sections of the spray boom (12) connected to the respective valves (14a-14j) in order to compensate for the pressure wave-dependent influences on the valve-specific flow rate of spray liquid.

## Revendications

1. Procédé de commande de vannes (14a-14j) d'une rampe de pulvérisation (12) d'une machine d'épandage agricole, comportant les étapes consistant à :
- générer des signaux de tension (Uₐ, Uₑ) spécifiques aux vannes pour la commande de plusieurs vannes (14a-14j) disposées sur la rampe de pulvérisation (12) ; et
- fournir aux vannes (14a-14j) respectives les signaux de tension (Uₐ, Uₑ) spécifiques aux vannes,
**caractérisé en ce que** les signaux de tension (Uₐ, Uₑ) spécifiques aux vannes générés sont modulés en largeur d'impulsion et présentent respectivement un facteur d'utilisation (Dₐ-Dⱼ) spécifique aux vannes, le facteur d'utilisation correspondant au quotient de la durée d'impulsion et de la durée de période,
les facteurs d'utilisation (Dₐ-Dⱼ) spécifiques aux vannes compensant ou au moins réduisant les influences, dépendant de la position des vannes (14a-14j) respectives sur la rampe de pulvérisation (12), sur le débit de liquide de pulvérisation spécifique aux vannes, les facteurs d'utilisation de signaux de tension individuels ou de tous les signaux de tension se différenciant les uns des autres malgré un débit de consigne identique de liquide de pulvérisation.

2. Procédé selon la revendication 1,
**caractérisé en ce que,** lors de la génération des signaux de tension (Uₐ, Uₑ) spécifiques aux vannes, la pression de fluide (Pₐ, Pⱼ) appliquée aux vannes (14a-14j) respectives est prise en compte pour la compensation des influences, dépendant de la pression, sur le débit de liquide de pulvérisation spécifique aux vannes.

3. Procédé selon la revendication 2,
**caractérisé par** l'étape consistant à :
- déterminer les pressions de fluide (Pₐ, Pⱼ) appliquées aux vannes (14a-14j) respectives, de préférence par l'intermédiaire d'une ou de plusieurs mesures de pression dans la rampe de pulvérisation (12).

4. Procédé selon la revendication 3,
**caractérisé en ce que** la détermination des pressions de fluide (Pₐ, Pⱼ) appliquées aux vannes (14a-14j) respectives s'effectue par l'intermédiaire d'au moins une mesure de pression et d'un calcul de pression basé sur la mesure de pression et prenant en compte la variation de pression dans la rampe de pulvérisation (12).

5. Procédé selon l'une des revendications précédentes,
**caractérisé en ce que,** lors de la génération des signaux de tension (Uₐ, Uₑ) spécifiques aux vannes, la chute de tension spécifique aux signaux provoquée par la fourniture des signaux de tension (Uₐ, Uₑ) spécifiques aux vannes est prise en compte pour la compensation des influences, dépendant de la tension, sur le débit de liquide de pulvérisation spécifique aux vannes.

6. Procédé selon la revendication 5,
**caractérisé par** l'étape consistant à :
- déterminer les chutes de tension spécifiques aux signaux provoquées par la fourniture des signaux de tension (Uₐ, Uₑ) spécifiques aux vannes par une ou plusieurs mesures de tension.

7. Procédé selon l'une des revendications précédentes,
**caractérisé en ce que** les signaux de tension (Uₐ, Uₑ) spécifiques aux vannes générés compensent ou au moins réduisent les influences d'ondes de pression (P_{W}) dans les tronçons de conduite de la rampe de pulvérisation (12) reliés aux vannes (14a-14j) respectives sur le débit de liquide de pulvérisation spécifique aux vannes.

8. Procédé selon la revendication 7,
**caractérisé en ce que,** lors de la génération des signaux de tension (Uₐ, Uₑ) spécifiques aux vannes, une propagation d'ondes de pression, en particulier la vitesse de propagation d'ondes de pression (P_{W}), dans la rampe de pulvérisation (12) est prise en compte en vue d'éviter ou de réduire les superpositions d'ondes de pression.

9. Procédé selon la revendication 8,
**caractérisé en ce que,** lors de la génération des signaux de tension (Uₐ, Uₑ) spécifiques aux vannes, en vue d'éviter ou de réduire des superpositions d'ondes de pression, la vitesse d'écoulement du liquide de pulvérisation dans la rampe de pulvérisation (12) et la longueur de conduite de la conduite à fluide entre des vannes (14a-14j) successives disposées les unes à la suite des autres en série sont prises en compte.

10. Procédé selon l'une des revendications 7 à 9,
**caractérisé par** l'étape consistant à :
- introduire des impulsions de pression dans les conduites de la rampe de pulvérisation (12) à l'aide d'un accumulateur de pression pour la compensation ou la réduction d'ondes de pression (P_{W}) dans la rampe de pulvérisation (12).

11. Système (10) pour la commande de vannes (14a-14j) d'une rampe de pulvérisation (12) d'une machine d'épandage agricole, en particulier au moyen d'un procédé selon l'une des revendications précédentes, comportant
- plusieurs vannes (14a-14j) disposées sur une rampe de pulvérisation (12) ; et
- un système de commande (20) qui est conçu pour générer des signaux de tension (Uₐ, Uₑ) spécifiques aux vannes pour la commande des vannes (14a-14j) et pour fournir, aux vannes (14a-14j), les signaux de tension (Uₐ, Uₑ) spécifiques aux vannes ;
**caractérisé en ce que** le système de commande (20) est conçu pour générer des signaux de tension (Uₐ, Uₑ) modulés en largeur d'impulsion et présentant respectivement un facteur d'utilisation (Dₐ-Dⱼ) spécifique aux vannes, de telle sorte que les influences, dépendant de la position des vannes (14a-14j) respectives sur la rampe de pulvérisation (12), sur le débit de liquide de pulvérisation spécifique aux vannes sont compensées ou au moins réduites, le facteur d'utilisation correspondant au quotient de la durée d'impulsion et de la durée de période et les facteurs d'utilisation de certains ou de tous les signaux de tension se différenciant les uns des autres malgré un débit de consigne identique de liquide de pulvérisation.

12. Système (10) selon la revendication 11,
**caractérisé en ce que** le système de commande (20) est conçu pour prendre en compte, lors de la génération des signaux de tension (Uₐ, Uₑ) spécifiques aux vannes,
- les pressions de fluide (Pₐ, Pⱼ) appliquées aux vannes (14a-14j) respectives pour la compensation des influences, dépendant de la pression, sur le débit de liquide de pulvérisation spécifique aux vannes et/ou
- la chute de tension spécifique aux signaux provoquée par la fourniture des signaux de tension (Uₐ, Uₑ) spécifiques aux vannes pour la compensation des influences, dépendant de la tension, sur le débit de liquide de pulvérisation spécifique aux vannes.

13. Système (10) selon la revendication 11 ou 12,
**caractérisé en ce que** le système de commande (20) est conçu pour prendre en compte, lors de la génération des signaux de tension (Uₐ, Uₑ) spécifiques aux vannes, les ondes de pression (P_{W}) apparaissant dans les tronçons de conduite de la rampe de pulvérisation (12) reliés aux vannes (14a-14j) respectives, pour la compensation des influences dépendant des ondes de pression sur le débit de liquide de pulvérisation spécifique aux vannes.
